## Europäisches Patentamt

## European Patent Office

## Office européen des brevets

(11) Numéro de publication: **0 174 232**
**B1**

## FASCICULE DE BREVET EUROPÉEN

(45) Date de publication du fascicule du brevet:
02.11.88

(51) Int. Cl.⁴: **C 02 F 1/52,** B 01 D 21/00

(21) Numéro de dépôt: **85401571.6**

(22) Date de dépôt: **31.07.85**

(54) **Procédé de clarification à lit de boue pour liquide chargé de matières solides.**

(30) Priorité: **31.07.84 FR 8412142**

(43) Date de publication de la demande:
**12.03.86 Bulletin 86/11**

(45) Mention de la délivrance du brevet:
**02.11.88 Bulletin 88/44**

(84) Etats contractants désignés:
**BE DE FR GB IT NL**

(56) Documents cité:
**EP-A-0 016 690**
**EP-A-0 052 864**
**CH-A-557 303**
**DE-A-2 238 959**
**FR-A-789 104**
**FR-A-1 309 226**
**US-A-2 382 490**
**US-A-4 330 401**

(73) Titulaire: **ALSTHOM, 38, avenue Kléber, F-75784 Paris Cédex 16 (FR)**

(72) Inventeur: **Lejeune, Pierre, 206, Cours de la Libération, F-38100 Grenoble (FR)**
Inventeur: **Berthod, Louis, 22, rue Commandant Bulle, F-38100 Grenoble (FR)**

(74) Mandataire: **Weinmiller, Jürgen, Lennéstrasse 9 Postfach 24, D-8133 Feldafing (DE)**

LIBER, STOCKHOLM 1988

## Description

L'invention concerne la clarification de liquides chargés de matières fines en suspension.

Les liquides à clarifier par le procédé de l'invention sont généralement des eaux qui apparaissent en sortie d'un processus industriel et sont par exemple destinées à un second usage industriel ou à un rejet dans un réseau collecteur public ou dans le sol. Bien que la description ci-après se réfère à des exemples pratiques de mise en oeuvre de ce procédé dans le cas d'eaux résiduelles d'industries minérales ou papetières, il est bien entendu que ce dernier peut être appliqué à la clarification de liquides chargés très divers.

Les procédés utilisés jusqu'à présent nécessitent un temps relativement long pour assurer la séparation et la décantation des matières solides en suspension de manière à obtenir un liquide ou une eau suffisamment clarifiée pour répondre aux normes imposées. Ceci résulte du fait que la vitesse ascensionnelle de séparation ne dépasse pas quelques mètres par heure, et oblige à utiliser un équipement de séparation coûteux et de dimensions et volume importants.

Il est généralement connu que pour accélérer la décantation des particules solides il est nécessaire d'établir des liaisons entre les particules en suspension. Dans le liquide chargé on ajoute pour cela une faible quantité d'un adjuvant approprié qui permet de déclencher le phénomène de floculation. Ce dernier forme des agglomérats ou flocons de dimensions nettement plus importantes que les particules qui les composent.

Généralement, après floculation, le liquide chargé de flocons de tailles différentes est introduit à un niveau intermédiaire du compartiment unique d'un dispositif de clarification et de décantation d'un type dit à un seul étage. Ce compartiment contient une concentration plus importante de flocons. Ceci permet d'accélérer le grossissement des flocons et par voie de conséquence leur vitesse de sédimentation. Les flocons décantés dans la partie basse de la zone de décantation de ce compartiment se concentrent et sont extraits, de façon généralement continue mais parfois discontinue, sous la forme de boue plus ou moins concentrée, avec un debit moyen convenablement déterminé. Le liquide clarifié est enlevé dans la partie haute du compartiment par simple débordement.

Il est également connu que, pour obtenir un effet plus rapide, on peut séparer les deux fonctions de clarification des liquides et de concentration des solides, c'est-à-dire les réaliser dans deux compartiments distincts de l'appareil. On dit alors que le dispositif est à deux étages. Les étages peuvent être superposés, l'étage de clarification étant au dessus de l'étage de concentration, ou concentriques, ou côte à côte.

Il est connu que le phénomène de floculation déclenché par des adjuvants de floculation forme des agglomérats dont la cohésion mécanique est faible, et que les mouvements hydrauliques dans la zone de clarification peuvent avoir à la fois des effets bénéfiques et des effets néfastes quant à la structure et aux caractéristiques physiques des agglomérats.

Des vitesses trop rapides dans certaines parties de l'appareil brisent des flocons antérieurement formés: Les flocons finalement formés présentent un spectre granulométrique trop étendu avec beaucoup d'agglomérats très fins se décantant mal. Des vitesses trop lentes dans d'autres parties permettent la formation de flocons trop gros qui s'agglomèrent entre eux. Ils forment alors des couches continues peu perméables qui gènent le passage du liquide à clarifier. Des phénomènes d'instabilité apparaissent alors avec formation de zones où ce liquide prend des vitesses rapides qui détruisent les flocons.

Plus particulièrement un premier procédé de clarification connu applicable à un liquide chargé de particules fines comporte les opérations suivantes:

- adjonction d'un adjuvant de floculation au liquide chargé pour que lesdites particules fines qui se rencontrent se lient en formant des flocons,
- introduction sensiblement continue de ce mélange dans une chambre de distribution à pression sensiblement uniforme amenant ce mélange dans une chambre de clarification à travers une pluralité d'injecteurs répartis sur la surface de cette chambre au bas de celle-ci,
- évacuation du liquide clarifié par un orifice d'évacuation de liquide en partie supérieure de cette chambre,
- et évacuation de boue à travers un orifice d'évacuation de boue situé plus bas.

Le débit de liquide chargé injecté est choisi de manière à former au dessus de ces injecteurs un lit de boue au sein duquel le liquide chargé monte entre des flocons déjà formés, et les particules fines encore en suspension dans cette eau se lient à ces flocons pour accroître le volume de ces derniers, de sorte que le liquide arrive clarifié au-dessus de ce lit de boue, et qu'une couche de liquide clarifiée se forme au-dessus du lit de boue.

Chacun de ces injecteurs est pourvu de moyens de guidage.

Ce procédé connu est décrit dans le document de brevet FR-A-2 477 896 (Ghezail et autres). Il présente les caractéristiques particulières suivantes:

Les injecteurs sont des orifices d'injection percés dans le plancher de la chambre de clarification, et lesdits moyens de guidage sont des éléments en forme d'entonnoir s'élargissant vers le haut à partir de ces orifices. Dans chaque plan horizontal coupant un tel entonnoir, la section de passage de l'eau chargée injectée serait, selon ce brevet (page 5, lignes 1-5) constituée par la totalité de la zone intérieure à l'entonnoir ce qui entrainerait une diminution très rapide de la vitesse de cette eau après la sortie des orifices d'injection. Ce résultat est recherché car dans ce procédé, on souhaite essentiellement l'absence d'agitation dans le lit de boue au-dessus des orifices d'injection. En fait, dès que la vitesse à travers l'orifice d'injection est sensible, il se forme un jet cylindrique axial à distance des parois de l'entonnoir. Par ailleurs dans ce procédé, une sortie temporaire partielle de la boue se fait de manière périodique à travers les orifices d'injection, par une aspiration temporaire entrainant une inversion brusque du sens de circulation à travers les orifices d'injection. Les parois des entonnoirs apparaissent alors constituer des moyens de guidage de la boue vers ces orifices. Ce sont ces inversions périodiques brèves du sens de circulation de l'eau chargée qui empêchent dans une certaine mesure la formation d'une couche continue insuffisamment perméable et l'apparition des phénomènes d'instabilité précédemment mentionnés.

Un deuxième procédé connu permet d'éviter dans une certaine mesure la formation d'une couche continue de boue insuffisamment perméable. Il est décrit dans le document de brevet FR-A-1 115 038 (Degremont) et utilise des accélérations temporaires périodiques du courant d'eau chargée à travers les orifices d'injection.

Un troisième procédé est connu par le document de brevet FR-A-2 431 317 (Dorr Oliver) correspondant au brevet américain n° 4 263 137 (Kos). Il utilise des injecteurs mobiles comportant des moyens de guidage en forme d'entonnoirs qui assurent un ralentissement du courant d'eau chargé injecté et sa répartition.

Un quatrième procédé connu est décrit dans le document de brevet DE-A-238 959 (H. Scheven).

Selon ce procédé le mélange de liquide chargé et d'agent de floculation est introduit dans une chambre de clarification à travers une pluralité d'injecteurs répartis sur la surface de cette chambre et chacun de ces injecteurs forme un jet vertical dirigé vers le bas en direction d'un déflecteur en forme de coupelle. Ce dernier divise ce jet, le répartit radialement et le renvoie vers le haut, c'est-à-dire vers un lit de boue. Il est précisé que l'association de ces injecteurs et de ces coupelles crée "un courant uniformément lent vers le haut". Ce procédé ne semble pas avoir été développé industriellement.

La présente invention a notamment pour but, lors de la mise en oeuvre d'un procédé de clarification du genre précédemment mentionné, de permettre de manière simple de donner au liquide qui remonte à travers ledit lit de boue une vitesse ascensionnelle moyenne augmentée et/ou de traiter un liquide chargé contenant une concentration accrue en matières solides, tout en conservant une bonne efficacité de séparation avec un même type de particules solides, et avec un même type et une même quantité de l'adjuvant de floculation relativement à la masse de matière solide.

Toute augmentation de cette vitesse ascensionnelle moyenne se traduit par un débit accru du liquide chargé traité dans une installation de surface donnée, ou, à débit à traiter donné, par une diminution de la surface nécessaire de l'installation. Lorsque le débit d'eau à traiter est important, une telle diminution de la surface de l'installation constitue un avantage économiquement important.

La présente invention a pour objet un procédé de clarification à lit de boue pour liquide chargé de matières solides, ce procédé étant appliqué à un liquide chargé par des particules fines en suspension pour fournir d'une part un liquide clarifié et d'autre part une boue, ce procédé comportant les opérations suivantes:

- adjonction d'un adjuvant de floculation audit liquide chargé pour réaliser un mélange dans lequel lesdites particules fines qui se rencontrent se lient en formant des flocons,
- introduction sensiblement continue de ce mélange dans une chambre de distribution (42) dans laquelle la pression est sensiblement uniforme et qui amène ce mélange dans une chambre de clarification (40) à travers une pluralité d'injecteurs (44) répartis sur la surface de cette chambre et présentant chacun un axe (80),
- évacuation du liquide clarifié par un orifice d'évacuation de liquide (72) en partie supérieure de cette chambre de clarification (40),
- évacuation de boue hors de cette chambre de clarification à travers au moins un orifice d'évacuation de boue (50, 52) disposé sensiblement plus bas que cet orifice d'évacuation de liquide (72),
- lesdits injecteurs (44) étant eux aussi disposés sensiblement plus bas que cet orifice d'évacuation de liquide (72), et le débit de liquide chargé injecté étant choisi de manière à former au dessus de ces injecteurs un lit de boue au sein duquel le liquide chargé monte entre des flocons déjà formés de sorte que les particules fines encore en suspension dans ce liquide se lient à ces flocons pour accroître le volume de ces derniers, et que le liquide arrive clarifié au-dessus de ce lit de boue en formant une couche de liquide clarifiée au-dessus du lit de boue,
- chacun de ces injecteurs (44) étant pourvu de moyens de guidage (76),
- ce procédé étant caractérisé par le fait que, entre ladite chambre de distribution (42) et la sortie de chacun desdits injecteurs (44), on crée une perte de charge interne supérieure à une valeur minimale et sensiblement égale pour ces divers injecteurs, cette valeur minimale étant égale à la différence des pressions au bas de deux colonnes liquides éventuelles qui présenteraient une même hauteur égale à la hauteur maximale du lit de boue au-dessus des injecteurs, l'une de ces colonnes étant constituée de liquide clair et l'autre de la boue la plus dense susceptible de se former dans le lit de la boue, ceci de manière à imposer une répartition sensiblement uniforme du débit de liquide chargé entre ces divers injecteurs malgré les amorces d'irrégularités qui apparaissent spontanément dans ce lit de boue,
- on agence lesdits moyens de guidage (78, 114) desdits injecteurs (44, 112) pour donner au courant de liquide chargé injecté la forme de jets divergents s'écartant de l'axe (80) de l'injecteur,
- et on choisit la pression et/ou l'altitude du liquide chargé dans la chambre de distribution (42) pour donner à ces jets une vitesse d'injection suffisante pour former au dessous du lit de boue, de part et d'autre de l'axe de chaque injecteur, au moins un tourbillon primaire (W1) s'écartant d'abord de l'axe de l'injecteur, jusqu'au bord d'une zone d'expansion de cet injecteur, puis montant, puis revenant vers l'axe de l'injecteur pour réaliser une agitation ménagée des couches inférieures de ce lit de boue, la distance entre deux injecteurs voisins étant choisie pour que ces zones d'expansion se rejoignent et occupent sensiblement toute la surface de la chambre de clarification sous le lit de boue.

(Les signes de référence entre parenthèses renvoient aux figures à simple titre d'exemple.)

Il y a intérêt à utiliser des injecteurs présentant une section minimale de passage de l'eau chargée assez grande pour éviter des bouchages ceci tout en réalisant ladite perte décharge interne. De ce point de vue les injecteurs des types décrits ci-après apparaîssent les plus intéressants.

Ladite perte de charge interne est généralement comprise entre 3 et 20 % de la hauteur maximale du lit de boue.

Il doit être bien entendu compris que lesdits jets divergents peuvent prendre des formes diverses telles que des lames coniques de révolution, des lames planes ou de multiples jets cylindriques pleins diversement inclinés sur l'axe de l'injecteur.

Il est de plus apparu avantageux d'adopter, au moins dans certains cas, les dispositions plus particulières suivantes:

- L'angle desdits jets divergents en sortie de l'injecteur à partir de l'axe de l'injecteur est en moyenne supérieur à 25° et de préférence à 60°.
- Chaque dit injecteur comporte d'une part un tronçon de tube qui reçoit le liquide chargé provenant de la chambre de distribution après application de ladite perte de charge interne et qui forme un jet primaire sensiblement vertical de liquide chargé, et d'autre part un déflecteur qui reçoit ce jet primaire, le divise et l'étale radialement pour former lesdits jets divergents.

- Ledit déflecteur a une forme de révolution coaxiale à l'injecteur. Il pourra dans certains cas être pourvu d'ailettes reparties sur sa circonférence et s'étendant chacune d'une part verticalement et d'autre part selon une direction horizontale inclinée sur un rayon pour donner une composante circonférentielle à la vitesse de chacun desdits jets divergents, et créer dans la zone d'expansion de l'injecteur un mouvement tourbillonnaire d'axe vertical propre à favoriser la divergence.

Les dipositions selon la présente invention permettent de maitriser l'ensemble des mouvements hydrauliques dans les différentes parties du dispositif afin de former des flocons les plus denses possibles, de dimensions suffisantes, par exemple de 1 à 10 mm, et afin que le liquide ne contienne pratiquement plus de matières fines en suspension non floculées.

A l'aide des figures schématiques ci-jointes on va décrire plus particulièrement ci-après, à titre non limitatif, comment l'invention peut être mise en oeuvre. Lorsqu'un même élément est représenté sur plusieurs figures il y est désigné par le même signe de référence.

La figure 1 représente une vue d'un premier dispositif de mise en oeuvre de l'invention, en demie coupe par un plan passant par l'axe vertical de ce dispositif.

La figure 2 représente une vue partielle de dessus du dispositif de la figure 1.

La figure 3 représente une vue d'un injecteur du dispositif de la figure 1 en coupe par un plan passant par l'axe vertical de cet injecteur.

La figure 4 représente une vue de dessus de l'injecteur de la figure 3.

La figure 5 représente une vue d'un deuxième dispositif de mise en oeuvre de l'invention, en demi coupe par un plan passant par l'axe vertical de ce dispositif.

La figure 6 représente une vue d'un injecteur du dispositif de la figure 5, en coupe par un plan passant par l'axe vertical de cet injecteur.

La figure 7 représente une vue très schématique des tourbillons crées dans le lit de boue par un injecteur du dispositif de la figure 5.

Le procédé qui va être décrit ci-après est particulièrement adapté au cas des industries de papeterie. Il utilise deux étages concentriques.

Les décanteurs concentriques à deux zones comportant un étage ou bassin primaire périphérique de décantation à lit de boue, suivi d'un étage ou bassin secondaire central d'épaississement de la boue, sont connus notamment par le brevet américain n° 439 0429 (Lejeune et al), par exemple pour le traitement des eaux d'effluents de papeterie d'un débit de 1500 m$^3$/h où l'on utilise un décanteur de diamètre 25 m.

Pour le traitement de débits beaucoup plus importants, on est limité par la capacité de l'étage périphérique qui est à fond incliné à la manière d'une surface de tronc de cône renversé, et on serait amené à utiliser trois bassins concentriques ou à augmenter de façon importante la profondeur du décanteur.

La présente invention permet d'augmenter la vitesse de décantation et de traiter des débits plus importants de liquide et/ou de matière solide tout en simplifiant la réalisation.

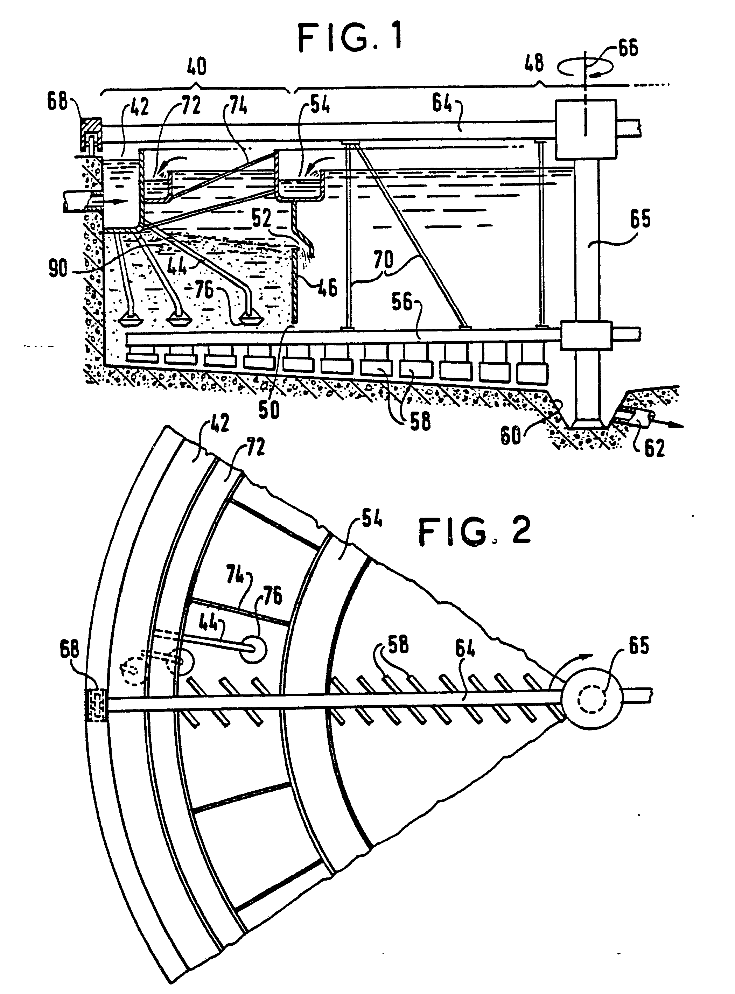

Le premier dispositif mettant l'invention en oeuvre dans ce but comporte un étage périphérique annulaire primaire 40 à lit de boue et à fond sensiblement plat; cet étage est alimenté en liquide chargé à partir d'une chambre de distribution 42 annulaire par des tubes plongeants 44 présentant ladite perte de charge interne pour assurer une répartition uniforme du fluide. Cette perte de charge résulte de la longueur de ces tubes, longueur qui contrairement à ce qui est représenté est sensiblement la même pour tous les tubes. Une paroi de séparation 46 délimite un bassin central d'épaississement de boue 48 qui constitue l'étage secondaire. Elle comporte des ouvertures inférieure 50 et supérieure 52 assurant l'écoulement des boues entre le bassin de décantation et le bassin d'épaississement central (figures 1 et 2).

La paroi cylindrique 46 séparant les deux bassins est suspendue à une goulotte flottante 54 recueillant par déversement l'eau clarifiée de l'étage secondaire 48. Des bras rotatifs 56 munis de râcleurs inclinés 58 au fond du bassin d'épaississement central peuvent donc être prolongés dans la partie périphérique pour assurer ainsi le nettoyage du fond du bassin de clarification ces râcleurs entraînent la boue épaissie du fond vers une cuvette d'évacuation centrale 60 munie d'une tubulure d'évacuation de boue 62. Le fond des deux bassins est légèrement incliné vers cette cuvette. Un arbre 65 est disposé sur le fond de cette cuvette et relie les bras de fond radiaux 56 à des bras radiaux horizontaux 64 au dessus de l'eau. Il est disposé selon l'axe vertical 66 du dispositif. La rotation est assurée en continu à l'aide d'un chariot 68 roulant lentement sur un chemin de roulement supérieur périphérique. Des tiges 70 relient par ailleurs les bras 64 aux bras 56 pour assurer l'entraînement de ces derniers.

Une goulotte périphérique 72 recueille l'eau clarifiée du bassin de décantation 40. La goulotte 54 est maintenue à l'aide de tiges 74.

Ceux des tubes 44 qui ne sont pas rectilignes ou sensiblement rectilignes sont éventuellement munis, à chaque coude, d'ouvertures obturées par des bouchons amovibles, de manière à permettre de desobstruer ces tubes à l'aide de tringles rigides lorsqu'ils viennent à être bouchés par des amas de fibres. (On peut aussi utiliser pour cela des jets de rinçage à tête chercheuse, ou des systèmes à boule mobile).

La surface en projection sur un plan horizontal de l'étage primaire est comprise entre 35 % et 65 % de celle de l'étage secondaire.

Le niveau supérieur du lit de boue 90 se maintient légèrement au dessus des ouvertures supérieures 52 qui jouent le rôle de déversoir.

Les tubes plongeant 44 se terminent à leurs extrémités inférieures par des injecteurs 76 dont trois seulement sont représentés, mais qui sont répartis sur toute la surface de l'étage de décantation 40 au bas du lit de boue, mais au-dessus des bras 56.

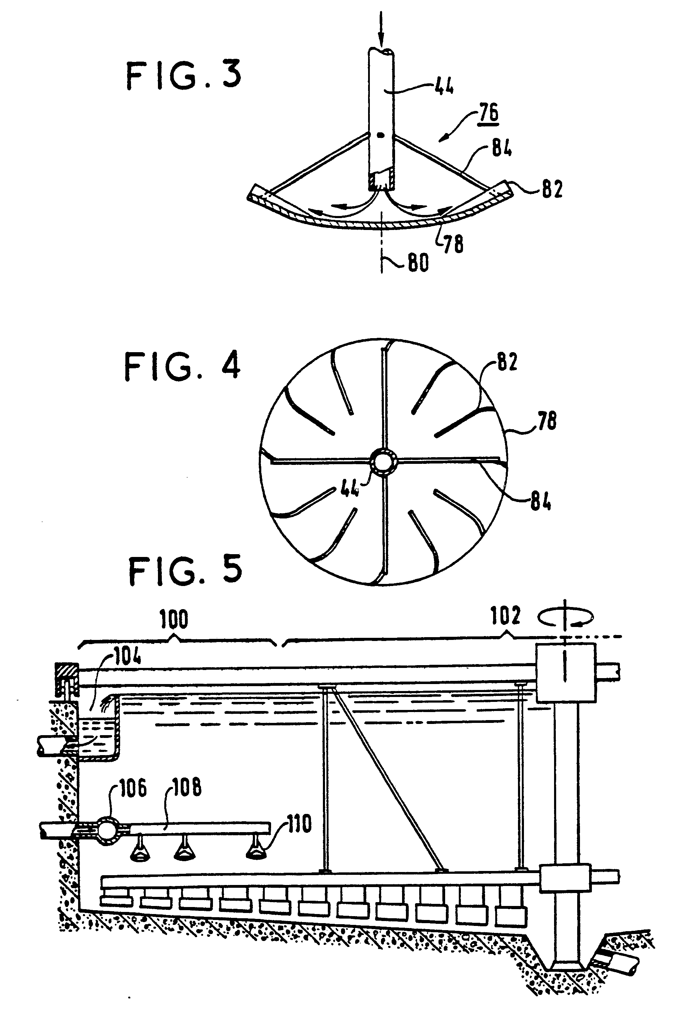

Ces injecteurs 76 vont être décrits à l'aide des figures 3 et 4. Chacun comporte un tronçon terminal d'un tube 44, qui forme un jet primaire vertical descendant selon un axe 80.

Un déflecteur 78, en forme de coupelle concave coaxiale reçoit ce jet et l'étale radialement tout en l'orientant légèrement vers le haut. Il forme ainsi les jets divergents précédemment mentionnés, qui prennent ici l'aspect d'une nappe conique continue ascendante. Les ailettes 82 précédemment mentionnées donnent à ces jets une composante de vitesse circonférentielle autour de l'axe 80. Le déflecteur 78 est suspendu au tube 44 à l'aide de tiges 84. Il doit être compris que, selon la matière et la concentration des particules solides chargeant le liquide à traiter, la vitesse du jet primaire vertical peut être choisie plus ou moins grande pour assurer la formation des tourbillons précédemment mentionnés, qui peuvent être visualisés dans des chambres d'essais à parois transparentes. Cette vitesse peut être ajustée sans changer la section des tubes 44, qui est choisie par ailleurs pour assurer ladite perte de charge interne, en disposant, à l'extrémité du tube 44 un divergent à faible ouverture angulaire, de 7° à 12° environ, pour diminuer la vitesse ou un convergent pour l'augmenter. La perte de charge interne ne doit en général pas être réalisée par un diaphragme ou analogue, car ce dernier créerait des survitesses propres à détruire des flocons et créerait aussi des risques de blocage.

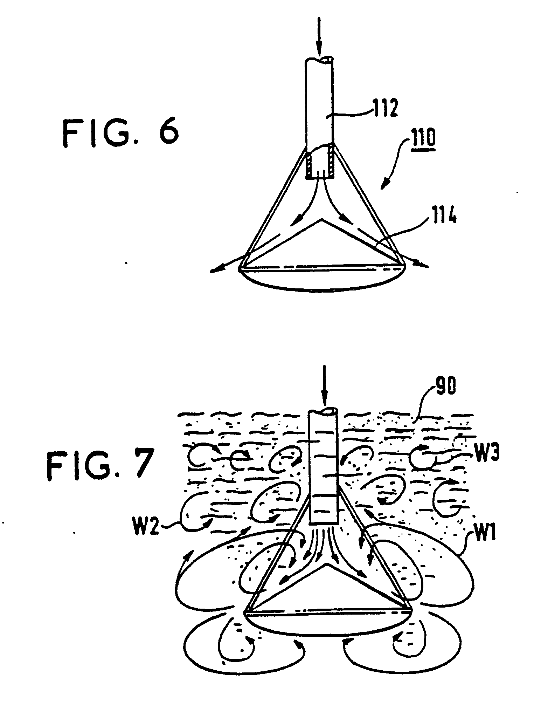

Par ailleurs le déflecteur peut être constitué par un cône comme indiqué sur la figure 6 ou par le fond du bassin de décantation.

Il est clair que des injecteurs analogues pourraient être utilises si les étages étaient de formes différentes par exemple rectangulaire.

Dans un deuxième dispositif analogue au premier et représenté sur la figure 5, la paroi entre l'étage primaire périphérique de décantation 100 et l'étage secondaire central d'épaississement 102 est supprimée. L'eau clarifiée est évacuée à l'aide d'une seule goulotte périphérique 104.

La chambre de distribution est constituée par une conduite circulaire 106 alimentant des conduites radiales immergées 108 qui alimentent elles mêmes des injecteurs 110. L'un de ceux-ci est représenté sur la figure 6. Il comporte un tube 112 formant un jet primaire vertical descendant et un déflecteur 114 présentant la forme d'un cône coaxial à pointe en haut avec une base en coupole convexe vers le bas. Ce déflecteur est maintenu par des tiges 116. Lesdits jets divergents sont orientés selon les génératrices du cone, c'est-à-dire qu'ils forment une nappe conique continue descendante. Le tourbillon primaire ainsi formé est représenté en W1 sur la figure 7. Il engendre des tourbillons secondaires W2 de plus faibles étendues au-dessus de lui, et des tourbillons tertiaires encore plus petits et plus lents encore au-dessus. Ces tourbillons homogénéisent le lit de boue sans briser sensiblement les flocons. Leur énergie se dissipe progressivement. Ils se superposent à un mouvement moyen uniforme vers le haut.

Dans le cas du traitement d'effluents de papeterie, le premier dispositif décrit ci-avant peut fonctionner dans les conditions suivantes (valeurs approximatives):

- concentration moyenne de l'eau
à clarifier en matière solide      : 2 g/l
- concentration du lit de boue      : 50 g/l
- concentration de l'eau
clarifiée      : 20 mg/l
- vitesse ascensionnelle de l'eau à travers le lit de boue 3 m/h (au lieu de 2 m/h) avec les dispositifs antérieurs)
- diamètre intérieur des tubes 44 : 50 mm (sur toute leur longueur,
- perte de charge réalisée grâce à la longueur de ces tubes 250 mm de colonne d'eau.
- Distance entre deux tubes voisins, de 1 à 2 m.
Les adjuvants de floculation utilisés ici sont ceux qui le sont habituellement dans ce genre d'opérations, et avec les mêmes concentrations.

**Revendications**

1. Procédé de clarification à lit de boue pour liquide chargé de matières solides, ce procédé étant appliqué à un liquide chargé par des particules fines en suspension pour fournir d'une part un liquide clarifié et d'autre part une boue, ce procédé comportant les opérations suivantes:

- adjonction d'un adjuvant de floculation audit liquide chargé pour réaliser un mélange dans lequel lesdites particules fines qui se rencontrent se lient en formant des flocons,
- introduction sensiblement continue de ce mélange dans une chambre de distribution (42) dans laquelle la pression est sensiblement uniforme et qui amène ce mélange dans une chambre de clarification (40) à travers une pluralité d'injecteurs (44) répartis sur la surface de cette chambre et présentant chacun un axe (80),
- évacuation du liquide clarifié par un orifice d'évacuation de liquide (72) en partie supérieure de cette chambre de clarification (40),
- évacuation de boue hors de cette chambre de clarification à travers au moins un orifice d'évacuation de boue (50, 52) disposé sensiblement plus bas que cet orifice d'évacuation de liquide (72),
- lesdits injecteurs (44) étant eux aussi disposés sensiblement plus bas que cet orifice d'évacuation de liquide (72), et le débit de liquide chargé injecté étant choisi de manière à former au dessus de ces injecteurs un lit de boue au sein duquel le liquide chargé monte entre des flocons déjà formés de sorte que les particules fines encore en suspension dans ce liquide se lient à ces flocons pour accroître le volume de ces derniers, et que le liquide arrive clarifié au-dessus de ce lit de boue en formant une couche de liquide clarifiée au-dessus du lit de boue,
- chacun de ces injecteurs (44) étant pourvu de moyens de guidage (76),
- ce procédé étant caractérisé par le fait que, entre ladite chambre de distribution (42) et la sortie de chacun desdits injecteurs (44), on crée une perte de charge interne supérieure à une valeur minimale et sensiblement égale pour ces divers injecteurs, cette valeur minimale étant égale à la différence des pressions au bas de deux colonnes liquides éventuelles qui présenteraient une même hauteur égale à la hauteur maximale du lit de boue au-dessus des injecteurs, l'une de ces colonnes étant constituée de liquide clair et l'autre de la boue la plus dense susceptible de se former dans le lit de la boue, ceci de manière à imposer une répartition sensiblement uniforme du débit de liquide chargé entre ces divers injecteurs malgré les amorces d'irrégularités qui apparaissent spontanément dans ce lit de boue,
- on agence lesdits moyens de guidage (78, 114) desdits injecteurs (44, 112) pour donner au courant de liquide chargé injecté la forme de jets divergents s'écartant de l'axe (80) de l'injecteur,
- et on choisit la pression et/ou l'altitude du liquide chargé dans la chambre de distribution (42) pour donner à ces jets une vitesse d'injection suffisante pour former au dessous du lit de boue, de part et d'autre de l'axe de chaque injecteur, au moins un tourbillon primaire (W1) s'écartant d'abord de l'axe de l'injecteur, jusqu'au bord d'une zone d'expansion de cet injecteur, puis montant, puis revenant vers l'axe de l'injecteur pour réaliser une agitation ménagée des couches inférieures de ce lit de boue, la distance entre deux injecteurs voisins étant choisie pour que ces zones d'expansion se rejoignant et occupent sensiblement toute la surface de la chambre de clarificaticn sous le lit de boue.

2. Procédé selon la revendication 1, caractérisé par le fait que l'angle desdits jets divergents en sortie de l'injecteur (44) à partir de l'axe (80) de l'injecteur est en moyenne supérieur à 25° et de préférence à 60°.

3. Procédé selon la revendication 1, caractérisé par le fait que chaque dit injecteur (76) comporte d'une part un tronçon de tube (44) qui reçoit le liquide chargé provenant de la chambre de distribution après application de ladite perte de charge interne et qui forme un jet primaire sensiblement vertical de liquide chargé, et d'autre part un déflecteur (78) qui reçoit ce jet primaire, le divise et l'étale radialement pour former lesdits jets divergents.

4. Procédé selon la revendication 3, caractérisé par le fait que ledit déflecteur (78) présente une forme de révolution coaxiale à l'injecteur, est pourvu d'ailettes (82) réparties sur sa circonférence et s'étendant chacune d'une part verticalement et d'autre part selon une direction horizontale inclinée sur un rayon pour donner une composante circonférentielle à la vitesse de chacun desdits jets divergents, et créer dans la zone d'expansion de l'injecteur (76) un mouvement tourbillonnaire d'axe vertical (80).

**Patentansprüche**

1. Verfahren zum Klären einer feststoffbeladenen Flüssigkeit mittels eines Schlammbettes, angewendet auf eine mit feinen Partikeln in Suspension beladene Flüssigkeit zur Gewinnung einer klaren Flüssigkeit einerseits und eines Schlammes andererseits, wobei das Verfahren folgende Arbeitsschritte umfaßt:
- Zugabe eines Flockenbildners zur beladenen Flüssigkeit zur Herstellung eines Gemisches, in dem sich die einander begegnenden feinen Partikel unter Bildung von Flocken binden,
- Einleitung des Gemisches in im wesentlichen kontinuierlicher Weise in eine Verteilerkammer (42), in der der Druck im wesentlichen gleichförmig ist und die das Gemisch durch eine Vielzahl von Injektoren (44), die über die Fläche dieser Kammer verteilt sind und jeweils eine Achse (80) besitzen, in eine Klärkammer (40) befördert,
- Abführung der geklärten Flüssigkeit durch eine Flüssigkeitsauslaßöffnung (72) im oberen Teil der Klärkammer (40),
- Abführung des Schlammes aus der Klärkammer durch mindestens eine Schlammauslaßöffnung (50, 52), die deutlich tiefer als die Flüssigkeitsauslaßöffnung (72) angebracht ist,
- wobei die Injektoren (44) ebenfalls deutlich tiefer als die Flüssigkeitsauslaßöffnung (72) angeordnet sind und der Durchsatz der eingebrachten beladenen Flüssigkeit so bemessen ist, daß sich oberhalb dieser Injektoren ein Schlammbett bildet, durch das die beladene Flüssigkeit zwischen den bereits gebildeten Flocken aufsteigt, derart, daß die in der Flüssigkeit noch in Suspension befindlichen feinen Partikel sich an diese Flocken binden und deren Volumen vergrößern, und daß die Flüssigkeit geklärt über dem Schlammbett ankommt und eine Schicht geklärten Wassers oberhalb des Schlammbetts bildet,
- wobei jeder Injektor (44) mit Führungsmitteln (76) versehen ist,
dadurch gekennzeichnet, daß zwischen der Verteilerkammer (42) und der Mündung jedes Injektors (44) ein inneres Druckgefälle erzeugt wird, welches größer als ein Mindestwert und im wesentlichen gleich groß für die verschiedenen Injektoren ist, wobei der Mindestwert der Differenz der Drücke am unteren Ende von zwei möglichen Flüssigkeitssäulen entspricht, welche eine gleichgroße Höhe entsprechend der maximalen Höhe des Schlammbettes über den Injektoren besitzen würden, wobei die eine der Säulen aus der klaren Flüssigkeit und die andere aus dem dichtesten Schlamm besteht, der sich im Schlammbett bilden kann, so daß eine im wesentlichen gleichmäßige Verteilung des Durchsatzes an beladener Flüssigkeit auf die verschiedenen Injektoren herbeigeführt wird, trotz des spontanen Auftretens von Störungen im Schlammbett,
- daß die Führungmittel (78, 114) der Injektoren (44, 112) so angeordnet werden, daß der Strömung der eingebrachten beladenen Flüssigkeit die Gestalt eines sich von der Achse (80) des Injektors entfernenden auseinanderstrebenden Düsenstrahles verliehen wird,
- und daß der Druck und/oder der Höhenstand der beladenen Flüssigkeit in der Verteilerkammer (42) so gewählt wird, daß die Düsenstrahlen eine Einspritzgeschwindigkeit erhalten, die ausreicht, um oberhalb des Schlammbettes zu beiden Seiten der Achse jedes Injektors zumindest einen primären Wirbel (W1) zu bilden, welcher sich zunächst von der Injektorachse bis zur Grenze einer Expansionszone dieses Injektors entfernt, dann aufsteigt, und dann wieder zur Injektorachse zurückkehrt, um eine mäßige Bewegung der unteren Schichten des Schlammbettes herbeizuführen, wobei der Abstand zwischen zwei benachbarten Injektoren derart gewählt ist, daß diese Expansionszonen aneinanderstoßen und im wesentlichen die gesamte Oberfläche der Klärkammer unter dem Schlammbett abdecken.

2. Verfahren nach Anspruch 1, dadurch gekennzeichnet, daß der Winkel der auseinanderstrebenden Düsenstrahlen an der Mündung des Injektors (40) bezogen auf die Achse (80) des Injektors im Durchschnitt größer als 25° ist und vorzugsweise 60° beträgt.

3. Verfahren nach Anspruch 1, dadurch gekennzeichnet, daß jeder Injektor (76) einerseits ein Rohrstück (44), welches die beladene Flüssigkeit aus der Verteilerkammer nach dem inneren Druckabfall aufnimmt und einen im wesentlichen senkrechten Primärstrahl der beladenen Flüssigkeit erzeugt, und andererseits einen Deflektor (78) besitzt, welcher den Primärstrahl empfängt, ihn teilt und radial unter Bildung der genannten auseinanderstrebenden Düsenstrahlen ausbreitet.

4. Verfahren nach Anspruch 3, dadurch gekennzeichnet, daß der Deflektor (78) eine rotationssymmetrische, koaxial zum Injektor angeordnete Form besitzt und mit Flügeln (82) ausgestattet ist, welche über seinen Umfang verteilt sind und sich jeweils einerseits in senkrechter Richtung, andererseits in einer zum Radius geneigten waagrechten Richtung erstrecken, so daß der Geschwindigkeit jedes der Düsenstrahlen eine umfangsgerichtete Komponente vermittelt wird und in der Expansionszone des Injektors (76) eine Wirbelbewegung mit senkrechter Achse (80) erzeugt wird.

## Claims

1. Method of clarifying a liquid charged with solid material using a sludge bed, which is applied to a liquid charged with fine particles in suspension for providing both a clarified liquid and a sludge,

the method comprising the following operations:

- adding a flocculation additive to said charged liquid for preparing a mixture in which said fine particles that meet link up with one another and form flakes;

- feeding this mixture in a substantially continuous manner into a distribution chamber (42) having substantially uniform pressure and which supplies the mixture to a clarification chamber (40) via a plurality of injectors (44) distributed over the surface of the chamber, and each having an axis (80);

- removing the clarified liquid via a respective outlet orifice (72) disposed in the upper part of the clarification chamber (40);

- removing the sludge from the clarification chamber via at least one respective outlet orifice (50, 52) located substantially at a lower level than the liquid outlet orifice (72),

- each of the injectors (44) being likewise located at a lower level than the liquid outlet orifice (72), and the flow rate of the injected charged liquid being selected in such a manner that a sludge bed is formed above the injectors, in which the charged liquid rises up between the flakes which have already been formed, so that the fine particle still suspended in the liquid link up with these flakes thereby increasing their volume, and that the liquid is clarified above said sludge bed and forms a layer of clarified liquid above the sludge bed,

- each of the injectors (44) being provided with guide means (76),

- this method being characterized in that an internal head loss is established between the distribution chamber (42) and the outlet of each of the injectors (44), which is greater than a minimum value and substantially the same for the various injectors, this minimum value being equal to the pressure difference at the bottom of two columns of liquid which may have the same height, equal to the maximum height of the sludge bed above the injectors, one of these columns being constituted by clear liquid and the other by the densest sludge likely to be formed in the sludge bed, thereby imposing a substantially uniform distribution of the flow rate of the charged liquid among the various injectors in spite of priming irregularities which occur spontaneously in this sludge bed,

- that the guide means (78, 114) of the injectors (44, 112) are so arranged as to confer fo the stream of the injected charged liquid a jet shape which diverges away from the injector axis (80), and that

- the pressure and/or height of the charged liquid in the distribution chamber (42) is chosen as to impart an injection speed to these jets which is sufficient for forming, below the sludge bed and on either side of the axis of each injector, at least one primary vortex (W1), which first diverges away from the injector axis onto the border of an expansion zone of this injector, then rises and then returns towards the injector axis for causing a controlled agitation of the lower layers of this sludge bed, the distance between two adjacent injectors being chosen in such a way, that the expansion zones recombine each other and occupy substantially the entire surface of the clarification chamber under the sludge bed.

2. A method according to claim 1, characterized in that the angle, along which the diverging jets leave the injector (44) related to the injector axis (80) is, on average, greater than 25°, and preferably 60°.

3. A method according to claim 1, characterized in that each injector (76) comprises on the one hand a tube section (44) which receives the charged liquid from the distribution chamber after application of the internal head loss and which forms a substantially vertical primary jet of charged liquid, and on the other hand a deflector (78), which receives the primary jet, divides it and spreads it out radially in order to form said divergent jets.

4. A method according to claim 3, characterized in that the deflector (78) which is circular in shape and coaxial to the axis of the injector, is provided with fins (82) distributed about its circumference, each extending both vertically and in a horizontal direction inclined to a radius for imposing a circumferential component upon the speed of each divergent jet, and for establishing a swirling motion about a vertical axis (80) in the injector (76) expansion zone.

# FIG. 1

# FIG. 2

0 174 232

FIG. 3

FIG. 4

FIG. 5

3

FIG. 6

FIG. 7